# EUROPEAN PATENT SPECIFICATION

(11) **EP 1 816 407 B1**
(45) Date of publication and mention of the grant of the patent: **18.04.2012**
(21) Application number: 06256378.8
(22) Date of filing: 14.12.2006
(51) Int. Cl.: F24F 1/00, F24F 13/20

(54) **Indoor unit of air conditioner**
Innenraumeinheit einer Klimaanlage
Unité d'intérieur pour climatiseur

(30) Priority: 07.02.2006 KR 20060011657
(43) Date of publication of application: 08.08.2007
(73) Proprietor: LG Electronics, Inc., Seoul (KR)
(72) Inventor: Cha, Sang Won, Suyeong-gu Busan (KR)
(74) Representative: Palmer, Jonathan R.

(56) References cited:
- EP-A- 1 271 065
- WO-A-03/014628
- JP-A- 4 184 021
- JP-A- 6 272 889
- JP-A- 2001 272 053
- JP-A- 2003 130 384

## Description

### Technical Field

The present invention relates to an indoor unit of an air conditioner, and more particularly, to an indoor unit of an air conditioner, in which a flow of air introduced into the indoor unit is made smooth for improving performance of the indoor unit while repair and inspection is made smooth.

### Background Art

In general, the air conditioner, serving as a room heater, a room cooler, or an air purifier for cooling/heating a room, or purifying room air, provides human being a better room environment. Recently, an air conditioner has been developed, which is provided with a turbo-fan to minimize a thickness of a cabinet thereof to permit the air conditioner to be mounted on a wall of the room like a picture frame.

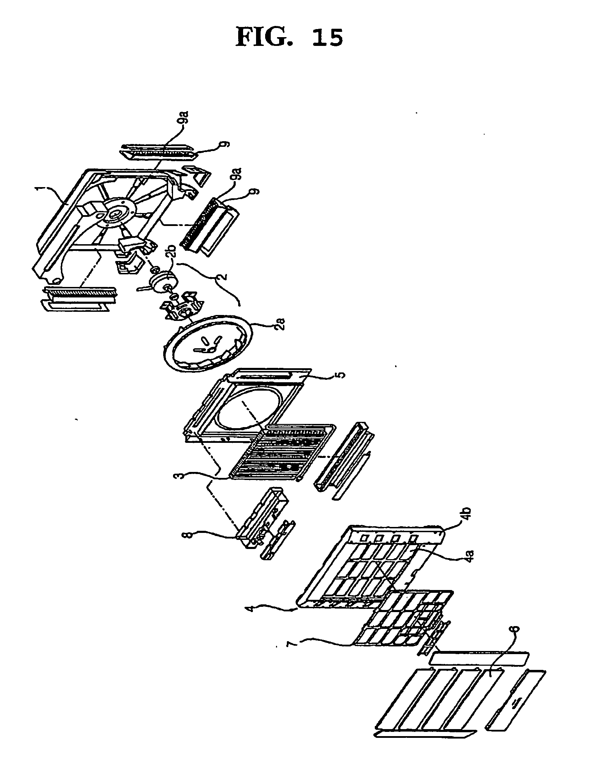

FIG. 15 illustrates an exploded perspective view of a related art air conditioner.

Referring to FIG. 15, the related art air conditioner is provided with a thin rectangular cabinet 1 with an opened front, a fan 2 in the cabinet 1, a heat exchanger 3 in front of the fan 2, a front panel 4 with an air inlet 4a in front of the heat exchanger 3, an orifice 5 which is an air outlet between the cabinet 1 and the front panel 4, and a front grill 6 rotatably mounted in front of the front panel 4, for opening/closing the air inlet 4a.

The fan 2 is provided with a turbo fan 2a and a motor 2b for rotating the turbo fan 2a, not only for minimizing thickness of the cabinet 1, but also for discharging air drawn through the air inlet 4a in a circumferential direction.

The orifice 5, between the heat exchanger 3 and the fan 2, guides the air from the air inlet 4a to the fan 2.

In the meantime, mounted between the front panel 4 and the orifice 5, there is a filter 7 for filtering air from the air inlet 4a, and mounted above the orifice 5, there is a control box 8 which is a control unit.

Mounted on the cabinet 1, there are outlet units 9 for guiding a direction of air blow at the time of air discharge from an inside of the cabinet 1.

The outlet unit 9 has an air outlet on an inner side with a plurality of grills 9a for guiding an air blow direction, and a motor (not shown) for operating vanes 9b.

However, the related art indoor unit of an air conditioner has a problem in that an air flow being introduced into the indoor unit is not smooth because the air flow has an angle to the front grills.

JP 06 272889 which discloses the features of the preamble of claim 1 describes a compact air conditioner in which the main body is compacted by an inclined surface of an upper surface.

EP 1271 065 describes an air conditioner having decoration panels installed on a front panel.

### Disclosure of Invention

It would be desirable to provide an indoor unit of an air conditioner, in which a mounting structure of an inlet grill through which the air is introduced is improved, to make the air flow smooth.

Accordingly, the invention provides an indoor unit of an air conditioner that includes a cabinet having a fan for blowing external air, and various outfits for conditioning air mounted therein, a picture frame panel connected to the cabinet for opening/closing the cabinet, and an inlet grill projected from the picture frame panel toward the cabinet and formed along a circumference of the picture frame panel for introduction of air into the cabinet.

The inlet grill is formed along a circumference of the picture frame panel and includes a plurality of ribs.

The inlet grill is in close contact with the front of the cabinet when the picture frame panel and the cabinet are secured. The indoor unit further includes a link mechanism hinged both on the cabinet and the picture frame panel, wherein the inlet grill is mounted to cover an outer side of the link mechanism.

The provision of an inlet grill to the picture frame panel a painting or a photograph can be put on a front thereof permits smooth supply of air into an inside of the indoor unit, thereby improving a performance of the indoor unit.

### Brief Description of Drawings

The accompanying drawings, which are included to provide a further understanding of the invention, illustrate embodiments of the invention and together with the description serve to explain the principle of the invention.

In the drawings:
FIG. 1 illustrates an exploded perspective view of an indoor unit of an air conditioner in accordance with a preferred embodiment of the present invention.
FIG. 2 illustrates an exploded perspective view of an inside of an indoor unit of an air conditioner in accordance with a preferred embodiment of the present invention.
FIG. 3 illustrates an exploded perspective view of a picture frame panel in accordance with a preferred embodiment of the present invention.
FIG. 4 illustrates an exploded perspective view of a deco-frame of a picture frame panel of the present invention.
FIG. 5 illustrates sections showing the steps of a process for assembling a picture frame panel in accordance with a preferred embodiment of the present invention.
FIG. 6 illustrates a perspective view of a deco-frame with fastening portions in accordance with a preferred embodiment of the present invention.
FIG. 7 illustrates a front view of a front panel in accordance with a preferred embodiment of the present invention.
FIG. 8 illustrates a front view of a front panel in accordance with a preferred embodiment of the present invention, having a service cover removed therefrom.
FIG. 9 illustrates an exploded perspective view of a cabinet and a front panel in accordance with a preferred embodiment of the present invention.
FIG. 10 illustrates a perspective view a cabinet and a front panel assembled together in accordance with a preferred embodiment of the present invention.
FIG. 11 illustrates a perspective view of a service cover and a drain pan in accordance with a preferred embodiment of the present invention.
FIG. 12 illustrates an exploded perspective view of a picture frame panel and a link mechanism in accordance with a preferred embodiment of the present invention.
FIG. 13 illustrates a side view of a link mechanism in accordance with a preferred embodiment of the present invention.
FIG. 14 illustrates a perspective view showing a operation state of a link mechanism in accordance with a preferred embodiment of the present invention.
FIG. 15 illustrates an exploded perspective view of a related art air conditioner.
Reference will now be made in detail to the preferred embodiments of the present invention, examples of which are illustrated in the accompanying drawings.

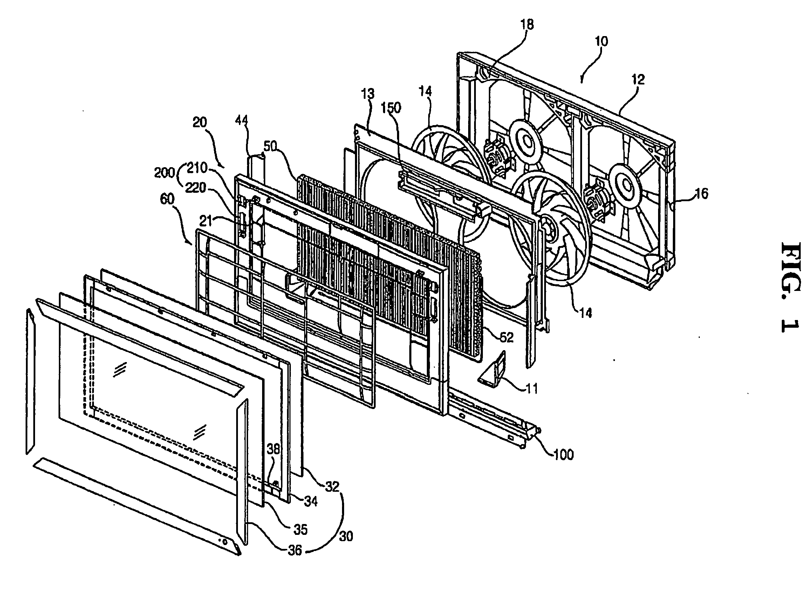

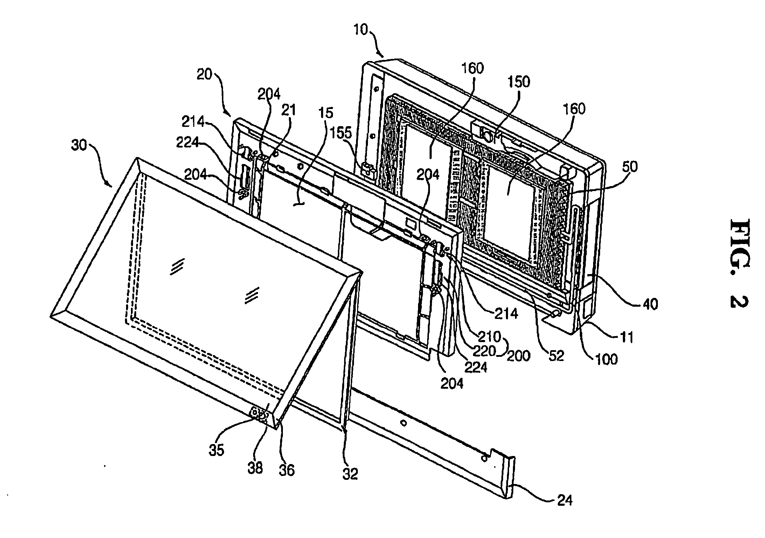

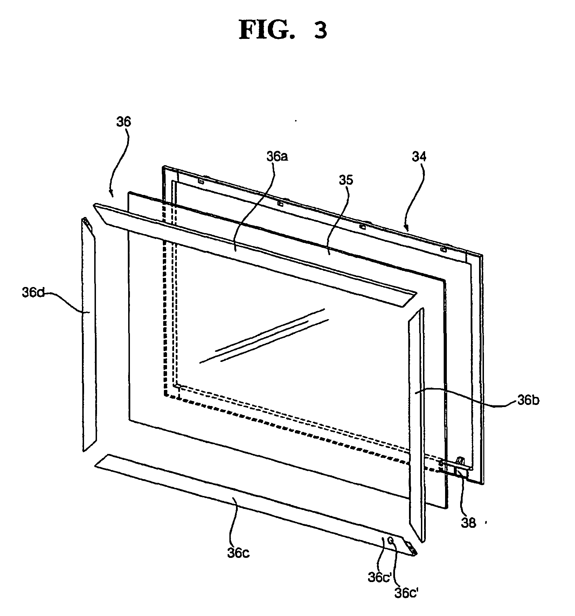

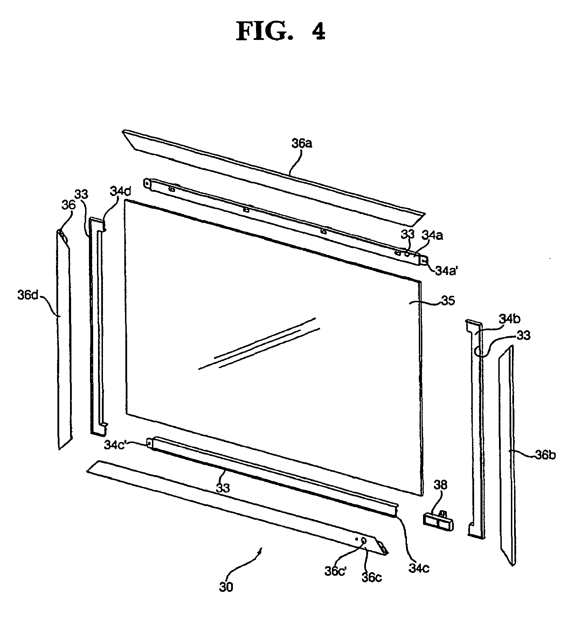

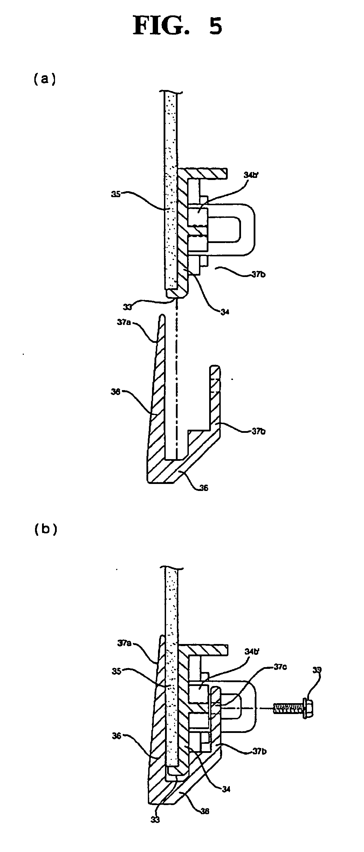

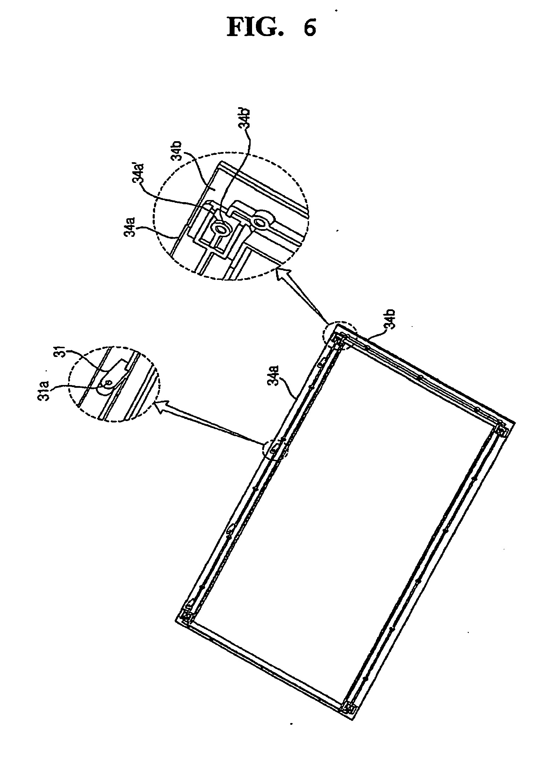

FIGS. 1 and 2 illustrate exploded perspective views each showing an indoor unit of an air conditioner in accordance with a preferred embodiment of the present invention, FIG. 3 illustrates an exploded perspective view of a picture frame panel in accordance with a preferred embodiment of the present invention, FIG. 4 illustrates an exploded perspective view of a deco-frame of a picture frame panel of the present invention, FIG. 5 illustrates sections showing the steps of a process for assembling a picture frame panel in accordance with a preferred embodiment of the present invention, and FIG. 6 illustrates a perspective view of a deco-frame with fastening portions in accordance with a preferred embodiment of the present invention.

Referring to FIGS. 1 or 2, the air conditioner in accordance with a preferred embodiment of the present invention includes a cabinet 10 having a front panel 20 mounted on a front, and a picture frame panel 30 mounted on the front panel 20 with a space thereto.

The front panel 20 has a central air inlet 15, and is fastened to the cabinet 10.

The cabinet 10 has at least one air outlet 16 for discharge of air.

The picture frame panel 30 is mounted in front of the front panel 20, spaced a predetermined distance from the front panel 20 to form a gap through which air moves toward the air inlet 15.

In the meantime, the indoor unit includes a base 12 to be mounted on a wall of a room, a fan 14 on the base 12 for drawing/discharging room air, and an orifice 13 for guiding air from the air inlet 15 to the fan 14.

The fan 14 between the base 12 and the orifice 13 guides the air from the air inlet 15 to the air outlet 16 entirely.

Particularly, the fan 14 is a centrifugal fan for discharging air from the orifice 13 in a circumferential direction.

On opposite sides of the fan 14, i.e., in opposite sides of the base 12, there are the air outlets 16 for guiding air from the fan 14 to an outside of the cabinet 10. Each of the air outlets 16 has an outlet unit 40 mounted thereon for opening/closing the air outlet 16.

The air outlet 16 on an underside of the base 12 also has the outlet unit 40 mounted thereon for guiding outlet air into the room opened/closed by the control unit of the indoor unit.

The base 12 is fixedly secured to the wall of the room with a bracket on a back side.

Mounted over the fan 14, i.e., at an upper portion of the base 12, there is an air guide 18 for guiding the air from the fan 14 to the air outlets 16 on both sides of the base 12.

In the meantime, mounted over the orifice 13, there is an outfit unit 150 of the control unit of the air conditioner.

In front of the orifice 13, there is a heat exchanger 50 for making heat exchange with room air for cooling/heating the room air, and under the heat exchanger 50, there is a drain pan 100 for holding and draining condensed water formed at the heat exchanger 50.

The heat exchanger 50 is secured to the front panel 20 or the orifice 13, and has a connection pipe 52 at one side for connection to a refrigerant pipe line (not shown) lead from an outside of the indoor unit.

Particularly, the heat exchanger 50 has a plasma filter 160 on a front.

The front panel 20 in front of the heat exchanger 50 is fastened to the base 12. The fastening of the front panel 20 to the base 12 forms the air outlet 16 on which the outlet unit 40 is mounted.

The cabinet 10 has pipe covers 11 mounted on corners to form a portion of an exterior of the indoor unit as the pipe covers 11 are mounted to corners of the base 12.

The pipe covers 11 are mounted to a plurality of corners of the four corners of the cabinet 10, through which the external refrigerant pipe line is lead into the cabinet 10.

In the meantime, referring to FIGS. 2 to 6, the picture frame panel 30 includes a picture frame base 32, and a picture frame assembly rotatably hinged on the picture frame base 32.

The picture frame assembly includes a deco-frame 34 hinged on the picture frame base 32, a transparent plate 35 placed in the deco-frame 34, a deco 36 for surrounding and holding the deco-frame 34 and the transparent plate 35 at a time, and a display window 38 in the deco-frame 34.

The transparent plate 35 is formed of transparent acryl, or glass, and positioned on a front of the picture frame base 32 for exposing a picture or a photograph attached to the picture frame base 32.

The deco-frame 34 is mounted on a periphery of the transparent plate 35 for securing the transparent plate 35.

Referring to FIG. 4 or 6, the deco-frame 34 includes four members 34a, 34b, 34c, and 34d for making close contact to four sides of the transparent plate 35, each of which are assembled together before mounting.

Accordingly, some members 34a and 34c of the deco-frame 34 have holes 34a'and 34c' respectively and other members 34b and 34d have bosses 34b' to be placed in the holes 34a' and 34c' respectively. A fastening member (not shown) is fastened to the boss 34b' after the deco 36 is assembled, to put the deco-frame 34 close to the deco 36.

Together with this, the members 34a, 34b, 34c, and 34d of the deco-frame 34 have outer edges 33 bent forward for surrounding an edge of the transparent plate 35.

On an upper side of a back side of the deco-frame 34, there are projections 31 toward the picture frame base 32, each with a hinge hole 31a for hinge connection to the picture frame base 32.

The hinge hole 31a is extended in a lateral direction at an upper side of the deco-frame 34 so that the picture frame assembly can turn around a top edge.

The projection 31 connects the picture frame base 32 to the picture frame assembly with a hinge as the projection is placed in a slot (not shown) in the picture frame base 32 and a pin (not shown) is passed through the slot and the projection 31.

On a lower side of the deco-frame 34, there is the display window 38 connected to the outfit unit 150 for displaying a signal.

The display window 38 between a lower side member 34c and a right side member 34b of the deco-frame 34 is mounted at a lower side of a right side of the drawing, and the lower member 36c of the deco 36 has a hole 36c' for exposing the display window 38.

Though the embodiment shows the display window 38 as a device for turning on an LED or the like, different from this, the display window 38 may be a flat display unit, such as an LCD.

The display window 38 displays an operation state of the indoor unit, or an environment of the room, or the like.

In the meantime, the deco 36, for surrounding and holding edges of the deco-frame 34 and the transparent plate 35 at a time, has one opened side facing the transparent window.

The deco 36 has four members 36a, 36b, 36c, and 36d for surrounding four edges of the transparent plate 35 at a time.

In grooves 37 in the members 36a, 36b, 36c, and 36d, the deco-frame 34 and the transparent plate 35 are placed.

Particularly, a front side blade 37a of the deco 36 is made to be in close contact with the transparent plate 35, and a rear side blade 37b of the deco 36 is made to be in close contact with the deco-frame 34.

The rear side blade 37b of the deco 36 is formed long enough to cover the hole 34a'/boss 34b' portions to which the members 36a and 36b of the deco-frame 34 are engaged.

The rear side blade 37b of the deco 36 has a hole 37c for placing a fastening member 39 therein, and the fastening member 39 placed through the hole 37c of the deco 36 is placed in the boss 34b' of the deco-frame 34 after the fastening member 39 is placed through the hole 37c. As an inserted depth of the fastening member 39 becomes the deeper, the fastening member 39 presses the deco-frame 34 onto the transparent plate 35.

The hole 37c in the deco 36 has a thread formed thereon for fastening with the fastening member 39, and an end of the fastening member 39 pushes the deco-frame 34 toward the transparent plate 35.

The front side blade 37a of the deco 36 is long enough to make the deco-frame 34 invisible through the transparent plate 35, the hole 36c' in the deco 36 matches with the display window 38.

Assembly of the picture frame panel 30 of the present invention is efficient because the fastening member 39 presses the deco-frame 34 onto the transparent plate 35 at the time the fastening member 39 is fastened, and fastening of the deco 36 and the deco-plate 34 is made at a time.

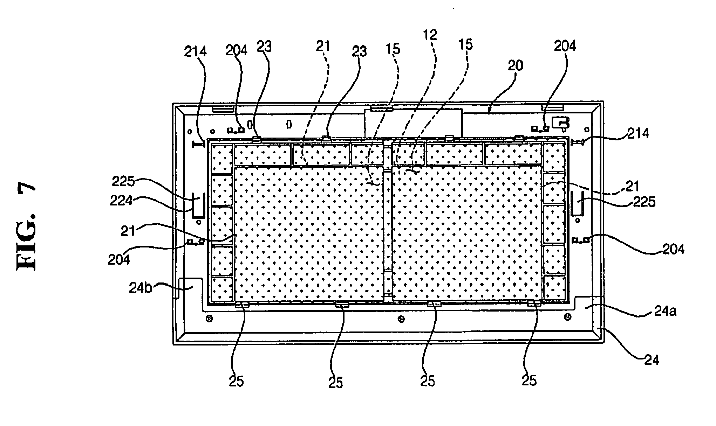

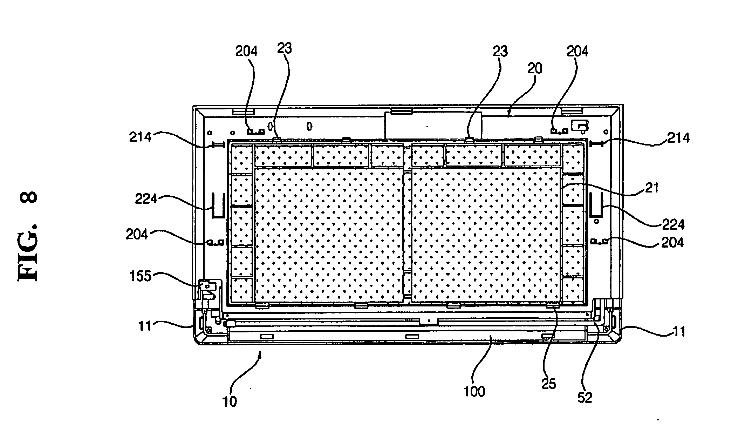

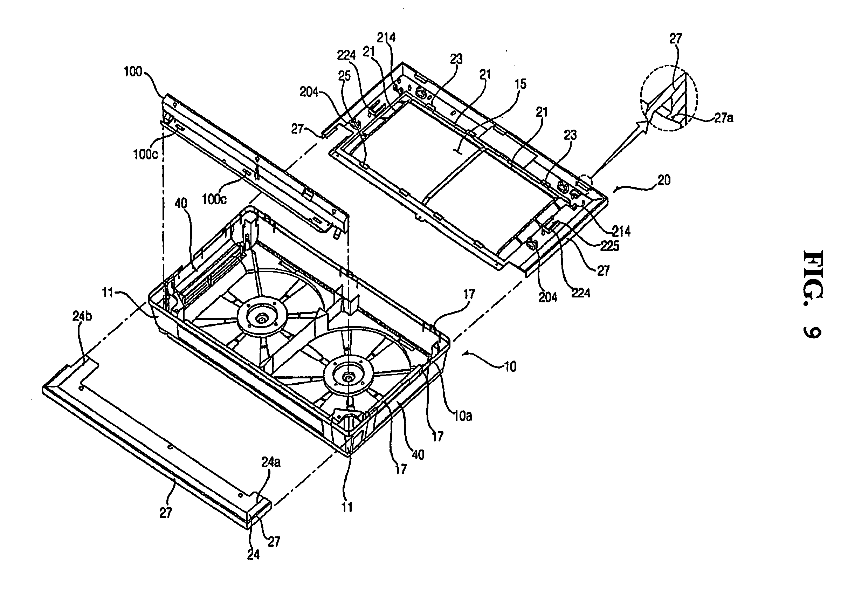

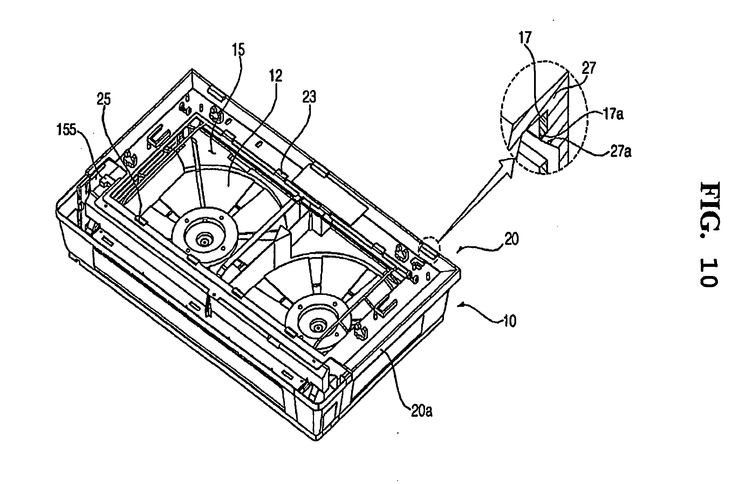

FIG. 7 illustrates a front view of a front panel in accordance with a preferred embodiment of the present invention, FIG. 8 illustrates a front view of a front panel in accordance with a preferred embodiment of the present invention, having a service cover removed therefrom, FIG. 9 illustrates an exploded perspective view of a cabinet and a front panel in accordance with a preferred embodiment of the present invention, and FIG. 10 illustrates a perspective view a cabinet and a front panel assembled together in accordance with a preferred embodiment of the present invention.

Referring to FIGS. 7 to 10, the front panel 20 includes the air inlet 15 at a center, and a service cover 24 under the air inlet 15 for covering a portion of an inside of the cabinet 10. The service cover 24 is a portion of an exterior of the front panel 20.

The service cover 24 is detachably mounted on the front panel 20 with a hook 27a and a hole 17a. The service cover 24 and the drain pan 100 are fastened together and is fastened to the front panel 20 with a bolt (not shown) or a screw (not shown).

Particularly, the service cover 24 is fastened to the front panel 20, such that one end 24a thereof is positioned in front of a lower connection pipe 52 of the heat exchanger for covering the connection pipe 52, and the other end covers a terminal box 155 for supplying power to the outfit unit 150.

The terminal box 155 is separate from the outfit unit 150, and connected with cable for supplying power.

Particularly, the terminal box 155, covered with the service cover 14, can be repaired only after removing the service cover 24 instead of removing the front panel 20 entirely, in a case repair of the terminal box 155 is required.

Moreover, at the time of installation of the indoor unit, after removing, not the front panel 20 entirely, but only the service cover, the refrigerant pipeline is connected to the heat exchanger, and the cable is connected to the terminal box 155, thereby simplifying the installation of the indoor unit.

Referring to FIG. 9 or 10, the cover portion 27 of the front panel 20 is bent backward to cover a front side edge of the cabinet 10.

The cabinet 10 has a rim 17 at a front side edge covered with the front panel 20, such that the rim 17 is inserted in the cover portion 17.

Particularly, in the embodiment, the hook 27a on an inside surface of the cover portion 27 of the front panel 20 and the hole 17a on the rim 17 of the cabinet 10 are engaged at the time the front panel 20 is mounted on the cabinet 10, such that the front panel 20 covers the rim 17 of the cabinet 10.

Thus, the front side edge of the cabinet 10 is covered with, and secured to the cover portion 27 which is a rear side edge of the front panel 20, such that a line of coupling of the cabinet 10 and the front panel 20 are not shown on the exterior of the indoor unit.

That is, the cover portion 27 is mounted to cover the rim 17 entirely, not to expose the rim 17, but to expose the cover portion 27 on the exterior of the indoor unit.

Accordingly, since the coupling line of the cabinet 10 and the front panel 20 is not exposed, the indoor unit has a simple exterior, to prevent the coupling line from becoming dirt with dust or impurity.

Moreover, since the front panel 20 covers an outside of the cabinet 10, the indoor unit of the present invention has a flatness improved at the coupling portion of the front panel 20 and the cabinet 10.

That is, if the coupling line is exposed to the exterior, the exterior appears elegant only when abutting surfaces of the front panel 20 and the cabinet 10 are continuous, if not, the flatness of the exterior appears poor. However, in the present invention, since the front panel 20 covers an outside of the cabinet 10, the flatness or a coupling state of the coupling line is not required to take into account, which increases freedoms of design.

In the meantime, the front panel 20 has a front grill 21 (see FIG. 1) on the front thereof, and the air inlet 15 has a filter 60 mounted thereon for filtering air flowing toward the orifice 13.

The front grill 21 is extended from the front panel 20 toward a center side of the air inlet 15 limited to a portion of a circumference of the air inlet 15.

The front grill 21 is projected forward from the front panel 20 toward the picture frame panel 30.

The filter 60 is detachably mounted on the front panel 20. In this instance, the filter 60 has a lower edge inserted in a slot 25 in the front panel 20, and an upper edge inserted in a holding slot 23.

The filter 60 is projected forward by a predetermined distance in conformity with the front grill 21 projected toward the picture frame panel 30. In the embodiment, the filter 60 has a circumference of the filter 60 attached to a circumference of the air inlet 15, and a central portion only bulged forward.

The central bulge of the filter 60 suppresses the filter 60 from being in contact with the heat exchanger 50 in a back side of the filter 60, and provides the filter 60 with a greater area compared to a planar filter.

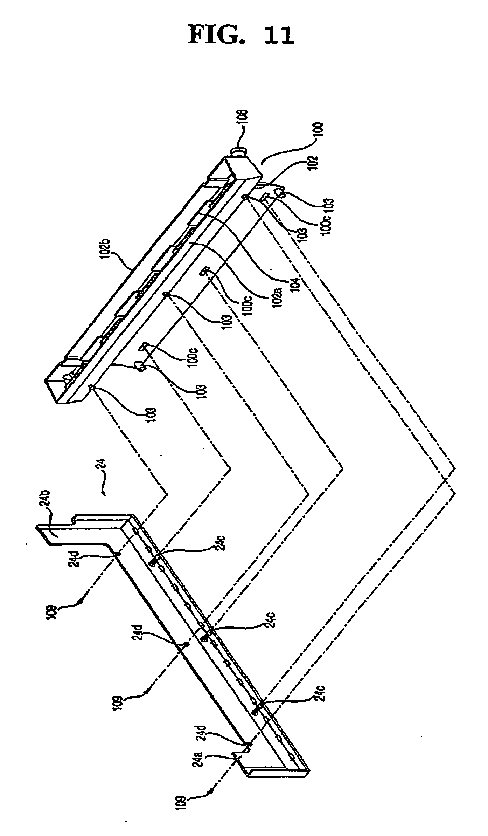

FIG. 11 illustrates a perspective view of a service cover and a drain pan in accordance with a preferred embodiment of the present invention.

Referring to FIG. 11, the service cover 24 of the present invention covers a lower outside circumference of the cabinet 10 fastened, and secured to the drain pan 100.

The service cover 24 has hooks 24c each projected from the back side toward the drain pan 100, and the drain pan 100 has slots 100c for placing the hooks 24c therein respectively.

Moreover, the service cover 24 is fastened to the drain pan 100 with fastening members 109 through fastening holes 24d in the service cover 24 and bosses 103 on the drain pan 100.

The drain pan 100 includes a housing 102, ribs 104 in the housing 102, and a drain pipe 106 for draining condensed water from the housing 102 to an outside of the indoor unit.

The housing 102 is a hexahedral box with an opened top. The heat exchanger 50 (see FIG. 1) is seated in the housing 102.

Particularly, the housing 102 has a top edge of a front wall 102a higher than a top edge of a rear wall 102b for reducing resistance of air passing through the heat exchanger 50.

The ribs 104 in the housing 102 are vertical to support a bottom of the heat exchanger 50.

The rib 104 is a thin plate extended in a lateral direction for lateral contact with the bottom of the heat exchanger 50 which is mounted in the lateral direction.

Particularly, the ribs 104 are formed to guide the condensed water toward the drain pipe 106.

The plurality of ribs 104 are arranged in a zigzag form for smooth movement of the condensed water from the housing 102 to the drain pipe 106 at a side of the service housing 102.

The rib 104 has a height lower than the top edges of the front wall 102a or the rear wall 102b of the housing 102, so that the front wall 102a or the rear wall 102b supports the front of rear of the heat exchanger 50.

The drain pipe 106 passes through the housing 102, and has an end on an outside of the housing 102 with a condensed water hose (not shown) connected thereto for guiding the condensed water from the housing 102 to an outside of the room.

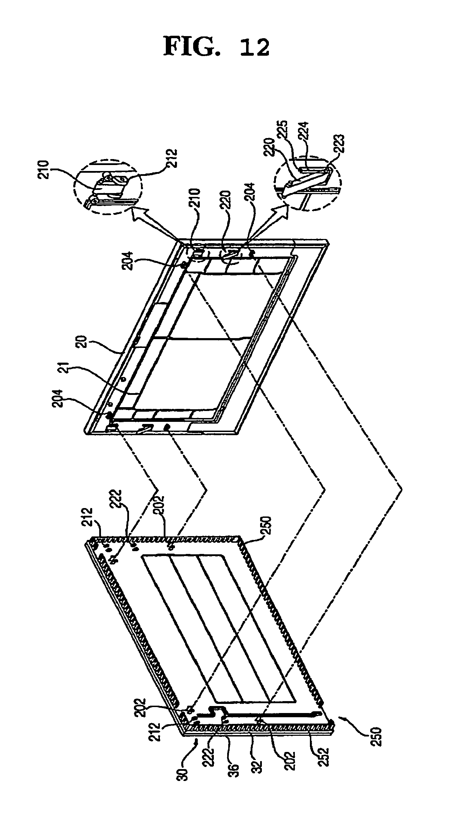

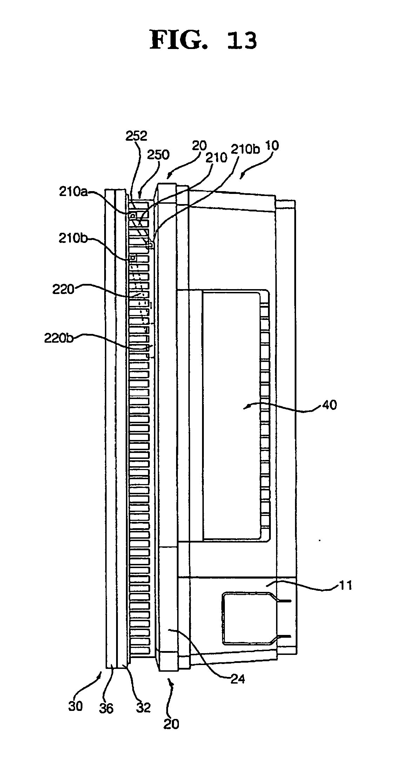

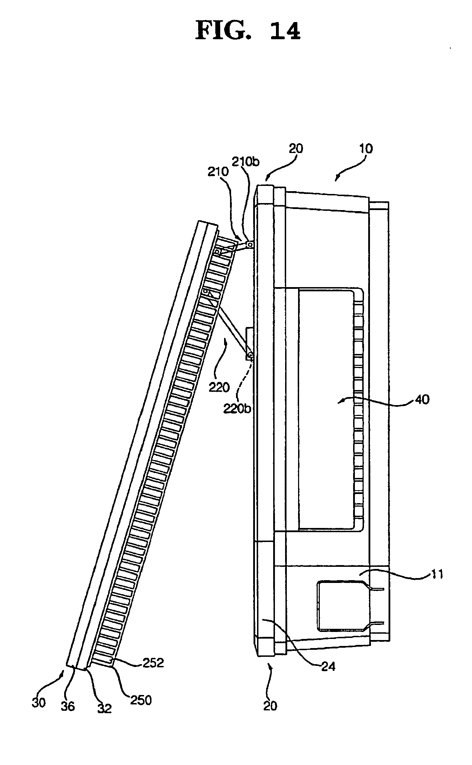

FIG. 12 illustrates an exploded perspective view of a picture frame panel and a link mechanism in accordance with a preferred embodiment of the present invention, FIG. 13 illustrates a side view of a link mechanism in accordance with a preferred embodiment of the present invention, and FIG. 14 illustrates a perspective view showing a operation state of a link mechanism in accordance with a preferred embodiment of the present invention.

Referring to FIGS. 12 to 14, following one-touch action of the user to activate a link mechanism, the picture frame panel 30 can move forward of the front panel 20.

The link mechanism 200 includes a rotatable link 210 and a support link 220 hinged both on the picture frame panel 30 and the front panel 20, respectively.

The rotatable link 210 is positioned over the support link 220, and both the rotatable link 210 and the support link 220 are hinged so as to be rotatable in an up/down direction.

On the back side of the picture frame base 32 of the picture frame panel 30, there are brackets 212 and 322 projected backward arranged in an up/down direction, and the front panel 20 also has brackets 214 and 324 projected toward the picture frame panel 30 arranged, respectively.

The rotatable link 210 and the support link 220 have one ends 210a and 220a hinged on the brackets 212 and 322 on the picture frame base 32, and the other ends 210b and 220b hinged on the brackets 214 and 324 on the front panel 20.

Particularly, the support link 220 is longer than the rotatable link 210.

Moreover, referring to FIG. 13, the one ends 210a and 220a of the rotatable link 210 and the support link 220 are positioned in front of the other ends 210b and 220b in a state the picture frame panel 30 is in close contact with the front panel 20.

At the picture frame panel 30 and the front panel 20, there are hooks 202 and slots 204 for holding the picture frame panel 30 spaced away in front of the front panel 20.

In the embodiment, the hooks 202 are formed on the back side of the picture frame base 32 on an upper side and sides thereof, and the slots 204 are formed in a front of the front panel 20 at positions opposite to the hooks 202.

As the picture frame panel 30 connected with the link mechanism 200 has a center of gravity in front of the front panel 20, if the picture frame panel 30 is not held by the hooks 202 and slots 204, the picture frame panel 30 is spaced from the front panel 20 by hinge structures of the rotatable link 210 and the support link 220 at a position in front of the front panel 20.

Moreover, the bracket 324 having the other end of the support link 220 connected thereto has rails 225 for slidable up/down movement of the other end 220b.

The rails 225 have the hinge 223 at the other end of the support link 220 movably placed therein, and a lower end of the bracket 324 is closed for supporting the support link 220.

Accordingly, the support link 220 is rotatably supported on the lower end of the bracket 324, and can be separated from the bracket 324 by pulling the other end 220b of the support link 220 upward if required.

On the back side of the picture frame base 32, there is an inlet grill 250 projected toward the front panel 20.

The inlet grill 250 on the back side of the picture frame base 32 forms a rectangular along a periphery of the picture frame base 32 when it is seen from the back side for preventing exposure of the fronts of the link mechanism 200 and the front panel 20.

The inlet grill 250 has a plurality of ribs 252 for guiding air moving toward the front panel 20, and preventing a child from putting a hand into a gap between the picture frame panel 30 and the front panel 20.

A process for assembling the picture frame panel in accordance with the present invention will be described with reference to FIGS. 1 to 6.

Members 34a, 34b, 34c, and 34d of the deco-frame 34 are assembled together.

Then, the transparent plate 35 is seated on the outer edge 33 of the deco-frame 34 which is bent forward to assemble the transparent plate 35 and the deco-frame 34.

The members 36a, 36b, 36c, and 36d of the deco 36 are inserted on four edges of the transparent plate 35 and the deco-frame 34 assemble thus respectively, such that the members 36a, 36b, 36c, and 36d of the deco 36 hold the transparent plate 35 and the deco-frame 34 at a time.

A fastening member 39 is fastened to the hole 37c in the rear of the deco 36, and the fastening member 39 is passed through the deco 36, and inserted in the boss 34b' on the deco-frame 34, to press the deco-frame 34 onto the transparent plate 35.

Particularly, the transparent plate 35 supported on the front blade 37a of the deco 36 is secured to the deco 36 by the fastening of the fastening member 39.

Along with this, the transparent plate 35 secured by the pressing of the deco-frame 34 wherein, since the transparent plate 35 is pressed uniformly over a contact area with the deco-frame, the fastening force is uniform, and since applied force through the fastening member 39 is not concentrated, deformation or breakage of the transparent plate 35 is prevented.

Moreover, the picture frame panel 30 has an advantage in that the deco-frame 34/the transparent plate 35/the deco 36 are secured at a time.

A process for mounting the front panel in accordance with a preferred embodiment of the present invention will be described in more detail with reference to FIGS. 1, and 7 to 11.

After mounting the fan 14 and the air guides 18 on the cabinet 10, the orifice 13 is mounted fit to the fan 14.

The outfit unit 150 is mounted over the orifice 13, the heat exchanger 50 is seated on the drain pan 100, the drain pan 100 is fastened to the cabinet 10, and the heat exchanger 50 is secured to a center of the orifice 13.

Then, the outlet units 40 are mounted to the air outlets 16 in the cabinet 10 respectively, and the front panel 20 is mounted on the cabinet 10.

At first, an upper portion of the front panel 20 is mounted on the cabinet 10, wherein the cover portion 27 of the front panel 20 is mounted to surround the rim 17 of the cabinet 10, and the hooks 27a on the inside surface of the cover portion 27 is inserted and held at the eyes 17a in the rim 17.

Next, after the upper portion of the front panel 20 is mounted, the service cover 24 is mounted.

After determining left/right sides of the service cover 24, the hook 24c on the back side of the service cover 24 is pushed into the hole 100c in the drain pan 100, to fastened the service cover 24, and a fastening member 109 is fastened thereto, for putting the service cover 24 and the drain pan 100 together, rigidly.

In this instance, the cover portion 27 on the service cover 24 also surrounds and holds the rim 17.

In the meantime, when the indoor unit is mounted, the front panel 20 is not removed entirely, but only the service cover 24 is removed, for connection of the connection pipe 52 of the heat exchanger 50 and the terminal box 155.

That is, depending on a direction of mounting of the pipe, the connection pipe 52 is mounted on a left side or a right side of the heat exchanger 50, and one of the left/right pipe cover 11 is removed, to connect the connection pipe 52 to the pipe (not shown) connected to the indoor unit.

Moreover, cables are connected to the terminal block 155 exposed at the time of connection of the pipe.

The process for mounting the picture frame panel of the present invention will be described in detail with reference to FIGS. 12 to 14.

The other ends 210b and 220b of the rotatable link 210 and the support link 220 are fastened to the brackets 214 and 224 of the front panel 20, and one ends 210a and 220a of the rotatable link 210 and the support link 220 are fastened to the brackets 212 and 222 on the back side of the picture frame panel 20.

The operation process of the link mechanism of the present invention will be described in detail with reference to FIG. 13 or 14.

If the picture frame panel 30 is pushed close to the front panel 20, such that the picture frame panel 30 rotates while the picture frame panel 30 is held both at the rotatable link 210 and the support link 220, a portion of the picture frame panel 30 connected to the rotatable link 210 and a portion of the picture frame panel 30 connected to the support link 220 rotate at radii different from each other.

Moreover, since the support link 220 is longer than the rotatable link 210, at the time the picture frame panel 30 moves forward, the forward movement of the picture frame panel 30 is restricted by the support link 220 after the one end 210a of the rotatable link 210 is rotated by a predetermined angle.

That is, referring to FIG. 12, when the picture frame panel 30 is secured to the front panel 20, the link mechanism 200 is mounted thereto, so that, if the picture frame panel 30 is pulled forward, the holding by the hooks 202 and the slots 204 are released, to rotate the picture frame panel 30 under the restriction of the link mechanism 200 while a center of gravity of the picture frame panel 30 moves.

In more detail, when the picture frame panel 30 starts to move as a moment acts on a center of gravity of the picture frame panel 30, the one end 210a of the rotatable link 210 rotates down from an upper side of the bracket 214 to a lower side of the bracket 214, and the one end 220a of the support link 220 rotates forward from an upper side of the bracket 324 by a predetermined angle.

Since the rotatable link 210 is shorter than the support link 220, enabling the rotatable link 210 to rotate greater than a rotation angle of the support link 220, the movement of the picture frame panel 30 stops when the one end 210a of the rotatable link 210 is positioned lower than a position of the bracket 214 that supports the rotatable link 210.

Accordingly, the user can open the picture frame panel 30 and inspect the filter 60 of the front panel 20 or an inside without supporting the picture frame panel 30.

Thus, at the time it is intended to clean the filter 60, the picture frame panel 30 of the present invention permits the user to replace the filter 60 easily because the lower side of the picture frame panel 30 is spaced away greatly even if the lower side of the picture frame panel 30 is not supported.

Moreover, it is not required to hold the picture frame panel 30 even at the time the service cover 24 of the front panel 20 is detached.

Moreover, even at the time the photograph or the picture on the picture frame panel 30 is replaced, the replacement of the photograph or the picture is easy because the picture frame panel 30 is projected to a lower side of the front of the indoor unit laid down with respect to the user.

In the meantime, as the rotation angles of the rotatable link 210 and the support link 220 are dependent on relative lengths of the rotatable link 210 and the support link 220, the rotation angles can be adjusted in a variety of ways, and the spaced distance projected forward can be set in a variety of ways.

Particularly, as far as the one end 220a of the support link 220 is not positioned lower than the bracket 224 that supports the support link 220, the picture frame panel 30 is supported on the support link 220, firmly.

When it is required to open the front of the picture frame panel 30, the other end 220b of the support link 220 may be detached, for opening the front of the front panel 20.

That is, because the hinge 223 on the other end 220b of the support link 220 is placed in the rail 225 of the bracket 224 and an upper side of the bracket 224 is opened, if the other end 220b is moved upward, the support link 220 can be detached from the bracket 224 easily as the rotation angle of the rotatable link 210 is adjusted.

In the meantime, though not shown, if the rotatable link arranged on an upper side is longer, the top side of the picture frame panel can be opened wider than the bottom side, which is also acceptable.

It will be apparent to those skilled in the art that various modifications and variations can be made in the present invention without departing from the scope of the invention. Thus, it is intended that the present invention cover the modifications and variations of this invention provided they come within the scope of the appended claims.

As has been described, the indoor unit of an air conditioner of the present invention has the following advantages.

The formation of the inlet grill as a unit with the picture frame panel enables to make air flow passed through the inlet grill smooth, a performance of the indoor unit can be improved.

## Claims

1. An indoor unit of an air conditioner comprising:
a cabinet (10) having a fan (14) for blowing external air, and various outfits for conditioning air mounted therein;
a picture frame panel (30) connected to the cabinet (10) for opening/closing the cabinet (10); **characterised by**
an inlet grill (21) projected from the picture frame panel (30) toward the cabinet and formed along a circumference of the picture frame panel for introduction of air into the cabinet.

2. The indoor unit as claimed in claim 1, wherein the inlet grill (21) includes a plurality of ribs arranged at regular intervals.

3. The indoor unit as claimed in claim 1, wherein the inlet grill (21) is in close contact with the front of the cabinet (10) when the picture frame panel (30) and the cabinet (10) are secured.

4. The indoor unit as claimed in one of claims 1 to 3, further comprising a link mechanism hinged both on the cabinet (10) and the picture frame panel (30), wherein the inlet grill is mounted to cover an outer side of the link mechanism.

## Patentansprüche

1. Innenraumeinheit einer Klimaanlage, umfassend:
ein Gehäuse (10) mit einem Gebläse (14) zum Blasen von Außenluft und verschiedenen darin angebrachten Einrichtungen zur Luftklimatisierung;
eine Bildrahmenplatte (30), die mit dem Gehäuse (10) verbunden ist,
um das Gehäuse (10) zu öffnen/zu schließen; **gekennzeichnet durch** einen Einlassgrill (21), der von der Bildrahmenplatte (30) zu dem Gehäuse hin vorsteht und entlang einem Umfang der Bildrahmenplatte ausgebildet ist, um Luft in das Gehäuse einzuführen.

2. Die Innenraumeinheit nach Anspruch 1, worin der Einlassgrill (21) eine Mehrzahl von mit regelmäßigen Intervallen angeordneten Rippen enthält.

3. Die Innenraumeinheit nach Anspruch 1, worin der Einlassgrill (21) engen Kontakt mit der Vorderseite des Gehäuses (10) steht, wenn die Bildrahmenplatte (30) und das Gehäuse (10) gesichert sind.

4. Die Innenraumeinheit nach einem der Ansprüche 1 bis 3, die ferner einen Kopplungsmechanismus aufweist, der an sowohl dem Gehäuse (10) als auch der Bildrahmenplatte (30) angelenkt ist, worin der Einlassgrill angebracht ist, um eine Außenseite des Kopplungsmechanismus abzudecken.

## Revendications

1. Unité intérieure d'un climatiseur comprenant :
une carrosserie (10) ayant un ventilateur (14) permettant de souffler de l'air externe, et divers outillages permettant de conditionner l'air y sont montés ;
un panneau de cadre décoratif (30) relié à la carrosserie (10) permettant d'ouvrir/fermer la carrosserie (10), **caractérisée par**
une grille d'entrée (21) projetée du panneau de cadre décoratif (30) vers la carrosserie et formée le long d'une circonférence du panneau de cadre décoratif pour introduire l'air dans la carrosserie.

2. Unité intérieure telle que revendiquée dans la revendication 1, dans laquelle la grille d'entrée (21) comporte une pluralité de nervures agencées à intervalles réguliers.

3. Unité intérieure telle que revendiquée dans la revendication 1, dans laquelle la grille d'entrée (21) est en contact étroit avec la partie avant de la carrosserie (10) lorsque le panneau de cadre décoratif (30) et la carrosserie (10) sont fixés.

4. Unité intérieure telle que revendiquée dans l'une des revendications 1 à 3, comprenant en outre un mécanisme de liaison articulé à la fois sur la carrosserie (10) et le panneau de cadre décoratif (30), où la grille d'entrée est montée pour couvrir un côté extérieur du mécanisme de liaison.
